# EUROPEAN PATENT SPECIFICATION

(11) **EP 3 745 882 B1**
(45) Date of publication and mention of the grant of the patent: **07.10.2026**
(21) Application number: 19702267.6
(22) Date of filing: 31.01.2019
(51) Int. Cl.: A23L 7/10, A23L 33/12, A23L 33/115

(54) **STABILIZING OMEGA-3 FATTY ACIDS WITH BRAN**
STABILISIERUNG VON OMEGA-3-FETTSÄUREN MIT KLEIE
STABILISATION D'ACIDES GRAS OMÉGA-3 AVEC DU SON

(30) Priority: 02.02.2018 EP 18154838
(43) Date of publication of application: 09.12.2020
(73) Proprietor: Société des Produits Nestlé S.A., 1800 Vevey (CH)
(72) Inventor: BEL-RHLID, Rachid, 1073 SAVIGNY (CH); GALAFFU, Nicola, 01210 Ornex (FR); HABEYCH NARVAEZ, Edwin,Alberto, 1010 Lausanne (CH); CHUAT, Jean-Yves, 1805 Jongny (CH); ROHFRITSCH, Zhen, 1003 Lausanne (CH); CANELLI, Greta, 8005 Zurich (CH)
(74) Representative: Dinger, Hansjörg
(86) International application number: PCT/EP2019/052382
(87) International publication number: WO 2019/149822

(56) References cited:
- WO-A1-01/80656
- WO-A1-2005/089569
- WO-A1-2009/018144
- WO-A1-2017/106597
- WO-A2-2009/102845
- WO-A2-2011/060307
- WO-A2-2012/171001
- JP-A- 2013 143 954
- US-A1- 2005 147 731
- US-A1- 2006 257 530
- US-A1- 2007 059 340
- US-A1- 2010 166 918
- US-B1- 6 436 431
- KERCKHOFFS DANIELLE A J M ET AL: "Cholesterol-lowering effect of beta-glucan from oat bran in mildly hypercholesterolemic subjects may decrease when beta-glucan is incorporated into bread and cookies", THE AMERICAN JOURNAL OF CLINICAL NUTRITION, AMERICAN SOCIETY FOR NUTRITION, US, vol. 78, no. 2, 1 August 2003 (2003-08-01), pages 221 - 227, XP002677481, ISSN: 0002-9165

## Description

### Field of the Invention

The present invention is in the field of food compositions comprising omega-3 fatty acids and bran or bran extract. Furthermore the invention is in the field of a food product comprising the food composition, a method of stabilizing omega-3 fatty acids such as dcosahexanoic acid (DHA) and/or eicosapentaenoic acid (EPA), and the use of bran or bran extract to prevent or reduce the development of unpleasant odours in oils comprising omega-3 fatty acids.

### Background of the Invention

Omega-3 fatty acids are polyunsaturated fatty acids (PUFAs), which contain several carbon-carbon double bonds (C=C), with the first one at the third carbon atom from the end of the carbon chain. The major omega-3 polyunsaturated fatty acids (ω3-PUFAs) are α-linolenic acid (ALA; C18:3), eicosapentaenoic acid (EPA; C20:5) and docosahexaenoic acid (DHA; C22:6) There is increasing evidence that a higher consumption of long chain ω3-PUFAs (20 or more carbons), such as DHA and EPA, may have beneficial health effects. Studies among people having a traditional marine diet, rich in DHA and EPA, show a low evidence of coronary heart diseases.

Long chain omega-3 fatty acids are commonly found in oily fish, such as salmon, herring, mackerel, tuna, anchovies and sardines. The long chain omega-3 fatty acids are also found in algal oils. Although fish are a dietary source of omega-3 fatty acids, fish do not synthesize them; they obtain them from the algae (microalgae in particular) or plankton in their diets.

However, DHA and EPA are well known to have a very strong odour and off-taste, associated with rotten fish. This leads to food products containing DHA or EPA being rejected by the consumer. Numerous attempts have been made to mask the off taste of fish oil or DHA. For example, EP 296117 to Warner- Lambert Co proposes to render unpleasant tasting edible oil palatable by adding a sensory masking agent. The sensory masking agent can be a taste-masking agent such as anethole, dihydroanethole, eugenol, vanillin, ethylvanillin, ethyl maltol. It can also be an artificial or natural odour masking agent, such as lime, lemon, orange, pineapple, grapefruit, cinnamon, clove, bay, allspice, anise, wintergreen, spearmint, benzaldehyde or cherry.

WO200414151 discloses a cereal based food product having a water activity between 0.2 and 0.4 and comprising encapsulated DHA and/or EPA and citrus flavour.

WO2009/018144 discloses a food composition comprising oil containing EIA and/or DHA absorbed into or onto rice bran wax.

Polyunsaturated fatty acids are susceptible to oxidation. Many of the oxidation products, particularly secondary oxidation products, have odours which are undesirable for human consumers. To stabilize omega 3-PUFAs rich oils, many food companies use synthetic antioxidants such as butylated hydroxytoluene (BHT), butylated hydroxyanisole (BHA), tertiary butyl hydroquinone (TBHQ), and gallates. However, the use of synthetic antioxidants to control oxidative degradation in food products is limited by consumers' increasing demand for foods with only "natural" ingredients.

The use of ascorbic acid or its derivatives is a well-known method for preventing oxidation of fish oil or DHA. JP 07107938 to Saneigen FFI KK discloses an emulsion composition for food, pharmaceuticals, cosmetics and pet food containing docosahexanoic acid and vitamin C, for long-term storage, avoiding odour change or rapid oil oxidation of e.g. purified palm oil.

However, the prior art approaches to mask or to remove the strong off-flavours and odours of DHA and EPA have either not been successful, or have required ingredients that are either not suitable for many food products or are unpopular with consumers.

Hence, there is a persisting need in the industry to find better solutions to the problem of omega-3 fatty acid unpalatability.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

### Summary of the invention

### The invention is set out in the appended set of claims.

An object of the present invention is to improve the state of the art and to provide an improved solutions to overcome at least some of the inconveniences described above or at least to provide a useful alternative.

The object of the present invention is achieved by the subject matter of the independent claims. The dependent claims further develop the idea of the present invention.

Not according to the invention for illustration purposes disclosed is a food composition comprising omega-3 fatty acids absorbed into or adsorbed onto bran wherein the omega-3 fatty acids comprise eicosapentaenoic acid and/or docosahexaenoic acid. Further disclosed is a food composition comprising omega-3 fatty acids and bran water extract. In a further aspect, the invention provides a food product comprising the food composition of the invention.

A further aspect of the invention relates to a method of stabilizing omega-3 fatty acids, the method comprising applying omega-3 fatty acids onto a composition comprising defatted bran and wheat bran water extract, so that the omega-3 fatty acids are absorbed into or adsorbed onto the bran.

A still further aspect of the invention is the use of a composition comprising defatted bran and wheat bran water extract to prevent or reduce the development of unpleasant odours in oils comprising omega-3 fatty acids.

It has been surprisingly found by the inventors that bran or bran extract is not only able to reduce the oxidation of DHA and EPA, but also reduces the unpleasant smell of these materials, even when some oxidation has occurred. Bran and bran extract is capable of preventing oxidation of omega-3 fatty acids during heat treatment processes which would otherwise lead to the development of off-flavours or odours.

### Brief Description of the Drawings

Figure 1 is a plot of Z-4-heptenal produced after 30 days at 38°C for fish oil and bran samples, measured by LC-HRMS as ratio of peak area over area of standard peak. Sample codes as Example 1
Figure 2 is a plot of Oxygen Radical Absorbance Capacity (ORAC) values µmol TE/100g for bran samples as Example 1.
Figure 3 is a plot of Z-4-heptenal produced after 30 days at 38°C for fish oil and bran water extract samples, measured by LC-HRMS as ratio of peak area over area of standard peak. Sample codes as Example 2.

### Detailed Description of the invention

Consequently the present invention relates in part to composition comprising omega-3 fatty acids, defatted bran and wheat bran water extract wherein the omega-3 fatty acids comprise eicosapentaenoic acid and/or docosahexaenoic acid, and wherein the defatted bran is defatted rice bran or defatted corn bran.

In the context of the present invention, the omega-3 fatty acids are not generally present as free fatty acids, they are predominantly found as fatty acid moieties in triglycerides and phospholipids. The omega-3 fatty acids may not originate from the bran. In an embodiment, the total eicosapentaenoic acid and docosahexaenoic acid is present at a level of at least 0.1 wt.% of the bran, for example at least 0.5 wt.% of the bran. Bran is the external protective shell of cereal grain, consisting of pericarp, testa (seed coat), nucellus, and aleurone layer. For a pseudocereal such as buckwheat, the term bran refers to the outer hull. The bran is defatted bran. Defatted bran may contain less than about 5 wt.% fat, less than about 4 wt.% fat, less than about 3 wt.% fat, less than about 2 wt.% fat, less than about 1.5 wt.% fat, less than about 1 wt.% fat, or less than about 0.5 wt.% fat. The defatted bran is defatted rice bran or defatted corn bran.

A oil comprising omega-3 fatty acids may be absorbed into or adsorbed onto bran.

For example the oil may be obtained from an oily fish, for example salmon, tuna, herring, mackerel, anchovies, menhaden, or sardines. For example the oil may be obtained from tuna. For further example the oil may be an algal oil.

The oil may be obtained from tuna and have a DHA content of over 20%.

In an embodiment, the food composition comprises vitamins such as vitamin A and minerals such as iron. The oxidative stability provided by the bran allows pro-oxidants such as iron to be combined with omega-3 fatty acids whilst preventing or limiting undesirable off-flavour development.

The defatted bran is defatted rice bran or defatted corn bran. References in the following to cereal brans other than defatted rice bran or defatted corn bran in combination with wheat bran water extract do not form part of the invention but are retained for comparative purposes.

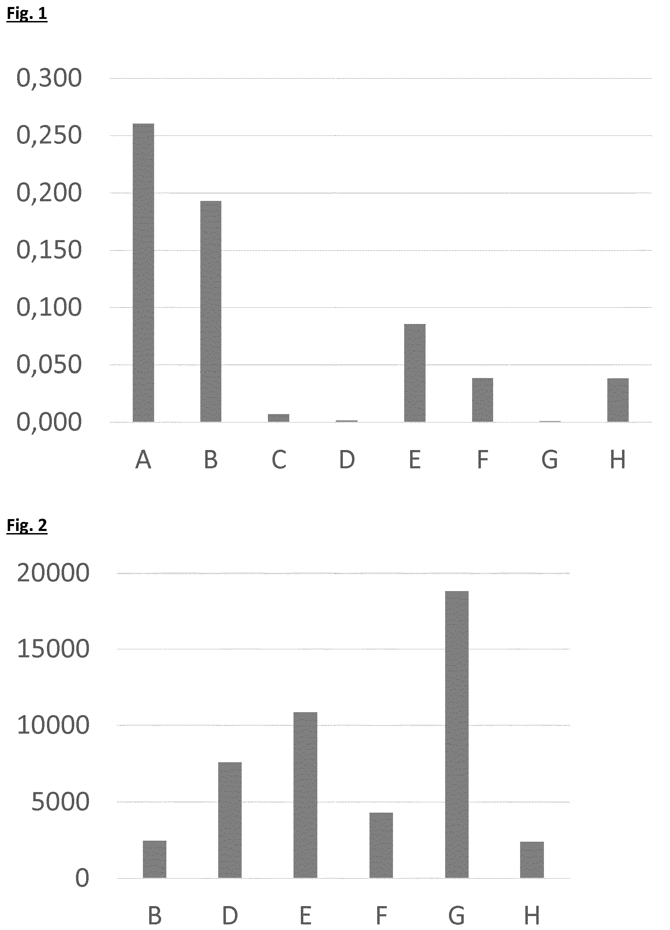

Corn, wheat and oat brans are especially effective at preventing oxidation of omega-3 fatty acids. In experiments where high DHA tuna oil was combined with different brans at a level of 10 wt.% and the generation of the oxidation product Z-4-heptenal measured over time at 38 °C; corn, wheat and oat brans led to lower levels of Z-4-heptenal being generated than rice bran (Figure 2). This is surprising as the ORAC values 1 of corn, wheat and oat brans are lower than that of rice bran (Figure 1). Z-4-heptenal is a secondary oxidation product of DHA and EPA degradation. Its smell is described as "fishy/rancid" and in edible oils it contributes to overall "burnt/fishy" flavours.

The defatted bran in the food composition of the invention may be powdered bran. In an embodiment the defatted bran has a D90 particle size distribution of less than 180 microns, for example less than 60 microns, for further example less than 30 microns. Reducing the particle size has three main effects. It makes the defatted bran less noticeable, it allows the defatted bran to remain dispersed in a liquid product without settling, for example when added to a soup, and it increases the surface area available to adsorb or absorb the omega-3 fatty acids. Defatted brans with a particle size distribution D90 less than 60 microns, for example less than 30 microns, are particularly suitable for dispersion in liquid products. The D90 value is a common method of describing a particle size distribution. The D90 is the diameter where 90 % of the mass of the particles in the sample have a diameter below that value. In the context of the present invention the D90 by mass is equivalent to the D90 by volume. The D90 value may be measured for example by a laser light scattering particle size analyser.

In an embodiment, the food product is a liquid product and the defatted bran has a D90 particle size distribution of less than 90 microns.

In an embodiment, the total eicosapentaenoic acid and docosahexaenoic acid is present in the food composition at a level of at least 0.5 wt.% of the defatted bran on a dry basis, for example at least 1 wt.% of the defatted bran, for further example at least 2 wt.% of the defatted bran,

An aspect of the invention provides a food composition comprising omega-3 fatty acids, defatted bran and wheat bran water extract wherein the omega-3 fatty acids comprise (for example consist of) eicosapentaenoic acid and/or docosahexaenoic acid, and wherein the defatted bran is defatted rice bran or defatted corn bran. A bran water extract (also known as bran aqueous extract, aqueous bran extract, or bran extract) is the result of performing an aqueous extraction on bran. For example, the bran may be ground, mixed with water and stirred before centrifuging off the supernatant which forms the bran water extract. The bran water extract may be dried to a powder, for example by spray-drying or freeze-drying.

In an embodiment, the total eicosapentaenoic acid and docosahexaenoic acid is present in the food composition at a level of at least 0.5 wt.% of the wheat bran water extract on a dry basis, for example at least 1 wt.% of the wheat bran water extract, for further example at least 2 wt.% of the wheat bran water extract.

In an embodiment, the food composition comprises an emulsion of an oil phase comprising omega-3 fatty acids and an aqueous phase comprising wheat bran water extract.

The emulsion may be a water-in-oil or an oil-in-water emulsion. For example, an oil comprising omega-3 fatty acids may be emulsified into an aqueous continuous phase, the aqueous continuous phase containing wheat bran water extract. The wheat bran water extract stabilizes the omega-3 fatty acids in the dispersed oil phase. Such a system could be used for a soup or a ready-to-drink beverage which has been pasteurized or sterilized.

In an embodiment, the emulsion is a double emulsion, for example a water-in-oil-in-water emulsion. Aqueous droplets of wheat bran water extract may be emulsified into an oil which contains omega-3 fatty acids, and then this oil further emulsified into an aqueous continuous phase. Such a system provides particularly good protection for the omega-3 fatty acids.

In the context of the present invention, the bran water extract is wheat bran water extract. For comparative purposes, bran water extracts from corn bran, rice bran, corn and rice bran mixtures, wheat and rice bran mixtures, and wheat and corn bran mixtures may also be used. These alternative bran water extracts do not form part of the invention.

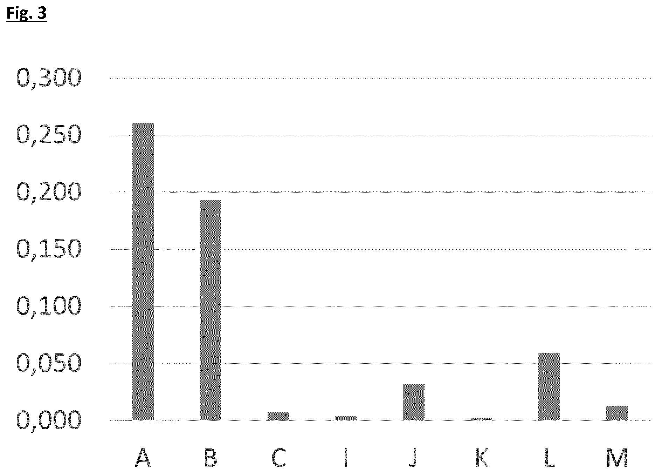

Water extracts of corn, wheat and oat brans are especially effective at preventing oxidation of omega-3 fatty acids. In experiments where high DHA tuna oil was combined with different bran water extract powders at a level of 10 wt.% and the generation of the oxidation product Z-4-heptenal measured over time at 38°C; bran water extracts from corn, wheat and oat led to lower levels of Z-4-heptenal being generated than buckwheat or rice bran water extracts (Figure 3). Tuna oil with corn bran water extract and tuna oil with wheat bran water extract were more stable than an equivalent commercial DHA powder containing synthetic antioxidants.

Surprisingly good results may be obtained for stabilizing omega-3 fatty acids by combining defatted rice bran with wheat bran water extract. A combination of wheat bran water extract and defatted wheat bran is less effective at stabilizing omega-3 fatty acids than defatted wheat bran alone. Surprisingly, in contrast, the stabilization of omega-3 fatty acids with defatted rice bran is enhanced by the addition of wheat bran water extract. In particular, this combination is effective at reducing the unpleasant odour of omega-3 fatty acids. Accordingly, the invention provides a food composition comprising omega-3 fatty acids, defatted bran and wheat bran water extract wherein the omega-3 fatty acids comprise eicosapentaenoic acid and/or docosahexaenoic acid, and wherein the defatted bran is defatted rice bran or defatted corn bran.

For example the defatted bran may be defatted rice bran and the bran water extract may be wheat bran water extract, or the defatted bran may be defatted corn bran and the bran water extract may be wheat bran water extract. The omega-3 fatty acids comprise (for example consist of) eicosapentaenoic acid and/or docosahexaenoic acid. In an embodiment the food composition is a heat-treated food composition. The heat treatment may be selected from the group consisting of baking, frying, oven drying, roller drying, vacuum belt drying, spray drying, steam treatment, pasteurization, sterilization, extrusion cooking and combinations of these. It is advantageous that the composition of the invention is able to survive such treatments with a reduced oxidation of omega-3 fatty acids such as eicosapentaenoic acid and docosahexaenoic acid and with less unpleasant odour being apparent. The heat treatment may comprise heating to at least 60 °C for at least 2 minutes. Pasteurisation involves the application of heat to kill a majority (but not all) of microorganisms present in food, leaving the food suitable for storage under refrigerated conditions. A common usage of pasteurisation is to treat milk. Typically, a pasteurisation process will heat a food to a temperature of at least 71 °C for at least one minute. In contrast to pasteurisation, sterilisation is intended to kill all microorganisms present in the food, leaving it suitable for long-term storage at room temperature. Sterilisation processes using heat therefore involve significantly higher temperatures than pasteurisation.

One advantage of the stabilizing omega-3 fatty acids with a composition comprising defatted bran and wheat bran water extract according to the invention is that pro-oxidant minerals such as iron can be added to a food product together with the omega-3 fatty acids such as DHA, even when the process involves heat treatment. Typically, when formulating heat-treated food products with DHA and minerals, the mineral mix has to be added separately, and in many cases physically separated from the DHA which leads to inefficient production processes and added cost.

An aspect of the invention provides a food product comprising the food composition of the invention. In the context of the present invention, the term food is used in the sense of any nutritious substance that people or animals eat or drink, so includes beverages.

The food product may be a cereal-based product, for example a product comprising at least 30 wt.% flour. As bran comes from cereals it has excellent consumer acceptance to stabilize components of a cereal based product. In an embodiment, the food product comprises at least 30 wt.% flour.

The food product according to the invention may be selected from the group consisting of beverages, dairy products, infant formula, cereal products, pet food, and food supplements.

Examples of beverages according to the present invention are meal replacements, oral nutritional supplements or ready-to-drink beverages. A ready-to-drink beverage according to the invention may for example comprise fish oil rich in DHA and/or EPA absorbed into or adsorbed onto a composition comprising defatted bran and wheat bran water extract. At small particle sizes (e.g. D90 < 60 microns) the defatted bran will remain suspended in the drink. The ready-to-drink product may be a vegetable "milk", for example soy milk.

The food product according to the invention may be a concentrated bouillon (for example a bouillon tablet), a taste-maker or a seasoning powder.

The dairy products according to the present invention may be ready-to-drink milk drinks. The dairy products according to the present invention may be powdered milk products, for example a powdered milk product comprising milk powder, powdered defatted bran an oil rich in omega-3 fatty acids acid and optionally vitamins and minerals.

The dairy products according to the present invention may be fermented milk products such as yoghurts. In the context of the present invention the term yoghurt may include, but is not limited to, materials complying with local food labelling regulations concerning the term "yoghurt".

The infant formula according to the invention may comprise fish oil, rich in omega-3 fatty acids, absorbed into or adsorbed onto a composition comprising defatted bran and wheat bran water extract, The infant formula according to the invention may comprise fish oil, rich in omega-3 fatty acids mixed with powdered wheat bran water extract.

Examples of cereal products according to the present invention may be selected from the group consisting of breakfast cereals, infant cereal, porridges, paps and cereal bars. The food product may be a powdered milk product comprising cereal, for example an instant porridge.

Examples of pet food according to the present invention may be selected from the group consisting of kibbles and pellets. The pet food may for example be a dry kibble for dogs or cats. The kibble may comprise a fish oil rich in DHA and/or EPA mixed with a composition comprising defatted bran and wheat bran water extract, for example defatted corn bran and wheat bran water extract.

The kibble may further comprise iron and vitamin A.

A food supplement, also known as a nutritional supplement or dietary supplement, is a preparation intended to supplement the diet and provide nutrients, such as vitamins, minerals, fibre, fatty acids, or amino acids that may be missing or may not be consumed in sufficient quantities in a person's diet. The food product according to the invention may be intended for mothers or mothers-to-be, for example it may be a beverage intended for mothers or mothers-to-be, for example a powdered beverage intended for mothers or mothers-to-be.

In an embodiment the invention provides a food product selected from the group consisting of a breakfast cereal, an infant cereal, an instant soup powder, a concentrated bouillon (for example a bouillon tablet), an infant formula, a biscuit (for example a wafer), a chocolate confectionery product, pasta (for example noodles) or a pet food, wherein the food product comprises a composition comprising defatted bran and wheat bran water extract.

In a further embodiment the food product according to the invention is a liquid soup or a ready-to-drink beverage.

In a further aspect the invention provides a method of stabilizing omega-3 fatty acids, the method comprising applying omega-3 fatty acids to defatted bran so that the omega-3 fatty acids are absorbed into or adsorbed onto the bran, so that the omega-3 fatty acids are absorbed into or adsorbed onto the bran, wherein the defatted bran is defatted rice bran or defatted corn bran. The omega-3 fatty acids comprise (for example consist of) eicosapentaenoic acid and/or docosahexaenoic acid. The omega-3 fatty acids may be applied to the bran in the form of an oil comprising omega-3 fatty acids. In an embodiment, the method further comprises heat treatment of the omega-3 fatty acids after they have been applied to bran, for example a heat treatment selected from the group consisting of oven drying, roller drying, vacuum belt drying, spray drying, steam treatment, pasteurization, sterilization, extrusion cooking and combinations of these.

In an aspect of the invention, the method of stabilizing omega-3 fatty acids comprises combining omega-3 fatty acids with wheat bran water extract. The omega-3 fatty acids comprise (for example consist of) eicosapentaenoic acid and/or docosahexaenoic acid.

The bran water extract may be dried to a powder before being combined with omega-3 fatty acids. The omega-3 fatty acids may be combined with wheat bran water extract in the form of an oil comprising omega-3 fatty acids. In an embodiment, the method comprises forming an emulsion of an aqueous phase comprising wheat bran water extract and an oil phase comprising omega-3 fatty acids. The aqueous phase may for example be prepared by mixing defatted bran with water, centrifuging and collecting the aqueous phase, optionally concentrating the aqueous phase by partial evaporation. The aqueous phase comprising wheat bran water extract may be emulsified into the oil phase by the methods known in the art. The resulting emulsion may be dried to form a powder for example by spray-drying, or used as such, for example a liquid emulsion may be mixed into a ready-to-drink beverage. In an embodiment, the method further comprises heat treatment of the omega-3 fatty acids after they have been combined with the wheat bran water extract, for example a heat treatment selected from the group consisting of oven drying, roller drying, vacuum belt drying, spray drying, steam treatment, pasteurization, sterilization, extrusion cooking and combinations of these. In an embodiment, the method of the invention comprises further adding minerals such as iron to the defatted bran or to the wheat bran water extract.

In an embodiment, the method of the invention comprises further adding vitamins such as vitamin A to defatted bran or to the wheat bran water extract.

An aspect of the invention provides the use of a composition comprising defatted bran and wheat bran water extract to prevent or reduce the development of unpleasant odours in oils comprising omega-3 fatty acids. The omega-3 fatty acids comprise (for example consist of) eicosapentaenoic acid and/or docosahexaenoic acid.

The inventors were surprised to find that wheat bran and rice bran not only prevent or reduce oxidation of oils comprising omega-3 fatty acids, they also reduce the unpleasant olfactory impact of oils comprising omega-3 fatty acids. Wheat bran and rice bran have a buttery cereal aroma, as do powders of dry wheat bran and rice bran water extracts. Fresh fish oil comprising omega-3 fatty acids has a slight odour as supplied commercially, but when combined with wheat or rice bran or bran extracts this odour is much less prominent for people sniffing the samples. After storage tests, samples of fish oil with wheat or rice bran were found to be more acceptable to people sniffing the samples in terms of undesirable fishy notes than samples of fish oil combined with other cereal brans or maltodextrin, even where greater extents of oxidation had occurred. The samples may, for example, be stored for up to 30 days at a temperature of at least 35 °C.

For comparative purposes, a method of reducing Z-4-heptenal formation in a food product comprising omega-3 fatty acids was studied. The omega-3 fatty acids may comprise (for example consist of) eicosapentaenoic acid and/or docosahexaenoic acid. For comparative purposes, the use of different cereal brans or bran extracts (including corn, wheat, oat and combinations thereof) to reduce Z-4-heptenal in oils comprising omega-3 fatty acids was investigated. In one comparative example, oat bran was used. In further comparative examples, bran extracts comprising combinations of corn extract, wheat extract and oat extract were tested.

Further advantages and features of the present invention are apparent from the figures and non-limiting examples.

### Examples

### Example 1: Fish oil stabilization and off-aroma reduction by solid cereal brans

Fish oil was obtained from Sofinol S.A. (Switzerland). The oil has a DHA content of >21.5% and is obtained from different tuna species, such as *Thunnus albacores, alalunga* and *obesus* and *Katsuwonus pelamis.*

The fish oil was mixed at 10 wt.% with different substrates (see table). The samples were stored for up to 30 days at 38 °C. Samples were prepared for each time point in duplicates.

| **Code** | **Name** | **Details** |
|---|---|---|
| A | Maltodextrin | 21DE, supplier Roquette |
| B | Maltodextrin + 0.5% ferulic acid | 0.5 g ferulic acid (Sigma-Aldrich) was added to 100 g maltodextrin in order obtain a similar concentration of ferulic acid as found in wheat bran |
| C | DHA powder | Commercial DHA powder with synthetic antioxidants |
| D | Wheat bran | Supplier: Granges-près-Marnand, Switzerland. Milled and passed through 80 µm sieve |
| E | Rice bran | Supplier: Herba Ricemills (Sevilla, Spain). Milled and passed through 80 µm sieve |
| F | Corn (maize) bran | Supplier: Limagrain |
| G | Buckwheat bran | Supplier: Limagrain |
| H | Oat bran | Supplier: Grain Millers |

As a reference, the analyses were performed with pure fish oil at the same concentration as in the substrate samples containing 10% fish oil. As a blank, the same experiments were run with the same substrates without fish oil.

The production of secondary oxidation products over time was studied by High Performance Liquid Chromatography High Resolution Mass Spectrometry (HPLC-HRMS) upon derivatization. The matrix/fish oil sample (2 g) was dissolved in chloroform/methanol (10 mL, 1/2 v/v). The dispersion was then shaken for 10 min at 2500 rpm by a mechanic shaker and centrifuged for 10 min at 2500 rpm. 100 µL of supernatant was combined with 5 µL of internal standard (ISTD: labelled acetone- 1,3-13C2 + hexanal-d12 at 10 µg/mL in acetonitrile (ACN)). 7-(diethylamino)coumarin-3-carbohydrazide (CHH) solution (100 µL, 8 mM) in ACN was added. CHH was used for the derivatization of carbonyl compounds (such as aldehydes and ketones) produced by lipid oxidation. Upon an incubation at 37°C for 1 hour 30 minutes, the volume of the samples was topped up to 500 µL by adding ACN. Samples were vortexed, centrifuged at 2500 rpm (20 °C) for 2 min and analyzed by (HPLC)-Electrospray Ionization (ESI) Q-Exactive HRMS for detection of the carbonyl compounds. The peak identification was based on accurate mass and retention time of CHH-carbonyl derivatives, and the measurement as ratio of peak area over area of internal standard peak.

Figure 1 plots the results at 30 days for Z-4-heptenal, chosen as a representative secondary oxidation product. Z-4-heptenal has a fishy/rancid aroma [Y.J. Cha et al., Journal of Agricultural and Food Chemistry, 46 (3), 1123-1128 (1998)].

For comparison, ORAC values for the different substrates were measured. This was performed by Institute Prof. Kurz GmbH, Germany. The ORAC values are plotted in Figure 2.

Combining fish oil with bran led to lower levels of Z-4-heptenal than obtained with sample B (maltodextrin + 0.5% ferulic acid). This indicates that it is not simply the ferulic acid content of a bran such as wheat which is responsible for the stabilizing effect. Combining omega-3 fatty acids with bran leads to a surprising level of stabilization against oxidation.

Combining fish oil with corn (F), wheat (D) and oat (H) brans led to lower levels of Z-4-heptenal being generated than with rice bran (E). This is surprising as the ORAC values (Oxygen Radical Absorbance Capacities) of corn, wheat and oat brans are lower than that of rice bran and so would be expected to be less effective at preventing oxidation.

The samples analysed by LC-HRMS were sniffed by a non-trained panel after a storage time of 0, 15 and 30 days at 38 °C. The panel's comments are listed in the table below.

| **Code** | **Name** | **Observation** | | |
|---|---|---|---|---|
| | | **T=0 days** | **T=15 days** | **T=30 days** |
| A | Maltodextrin | Neutral, slight fresh fish | Rancid, metallic | Strongly rancid |
| B | Maltodextrin + 0.5% ferulic acid | Neutral, slight fresh fish | Rancid, metallic | Strongly rancid |
| D | Wheat bran | Cereal-like | Buttery | Buttery/ fatty with slight fishiness |
| E | Rice bran | Cereal-like | Buttery | Buttery/ fatty with slight fishiness |
| F | Corn (maize) bran | Sweet, fresh fish | Fishy | Rancid |
| G | Buckwheat bran | Cereal-like, salty | Fresh fish | Fishy |
| H | Oat bran | Sweet, cereal-like | Fish | Strongly fishy, rancid |

Wheat bran (D) and rice bran (E) were found to have a most surprising ability to reduce the perception of fishy aromas from the aged fish oil. Even after 30 days, the wheat and rice bran samples were described as buttery and fatty, but were not considered objectionable. From the LC-HRMS analyses, the extent of generation of oxidation products such as Z-4-heptenal was higher for wheat bran and rice bran than for buckwheat bran (G), but the perceived unpleasant aroma was much less.

### Example 2: Fish oil stabilization and off-aroma reduction by cereal bran extracts

Powdered aqueous bran extracts were prepared by mixing 20 g of defatted bran with 100 g water and the mixture stirred for 1h at room temperature. The mixture was then centrifuged (5000 g, 20 min) and the water phase collected. The operation was repeated a second time. The water phases were pooled and lyophilized to form a bran water extract powder.

| **Code** | **Name** |
|---|---|
| I | Wheat bran water extract |
| J | Rice bran water extract |
| K | Corn bran water extract |
| L | Buckwheat bran water extract |
| M | Oat bran water extract |

Fish oil was mixed with the different bran water extract powders at a level of 10 wt.%. The samples were stored for up to 30 days at 38 °C and analyses as for the solid brans in Example 1.

Figure 3 plots the production of Z-4-heptenal for the bran water extract samples at 30 days with maltodextrin (sample A) for comparison. All the bran water extracts reduce the generation of DHA oxidation products. Surprisingly, oat, wheat and corn bran water extracts led to lower production of Z-4-heptenal than buckwheat and rice bran water extract, despite buckwheat and rice bran having higher ORAC values (Figure 2).

In sniffing tests, as for the solid brans, wheat and rice bran water extracts had a buttery aroma and reduced the perceived fishy notes on storage.

### Example 3: Combination of bran and bran water extract from different cereals

Powdered aqueous bran extracts of wheat bran and rice bran were prepared as in example 2. A mixture of 100 g defatted rice bran powder with 10 g of either rice bran water extract or wheat bran water extract was prepared. Fish oil was added to each powder mixture at a level of 10 wt.% and homogenized. A further sample with 10 wt.% fish oil and just defatted rice bran was prepared. The samples were stored at 38 °C for 30 days before being sniffed. The mixture of fish oil, rice bran and rice bran water extract smelt rancid after 30 days. The sample with fish oil and rice bran smelt buttery/fatty with slight fishiness (as for sample E in Example 1). The best sample was the mixture of fish oil, rice bran and wheat bran water extract which smelt even less fishy than the sample with fish oil and rice bran.

## Claims

1. Food composition comprising omega-3 fatty acids, defatted bran and wheat bran water extract wherein the omega-3 fatty acids comprise eicosapentaenoic acid and/or docosahexaenoic acid, and wherein the defatted bran is defatted rice bran or defatted corn bran.

2. Food composition according to claim 1 wherein the food composition is a heat-treated food composition.

3. A food product comprising the food composition of any one of claims 1 and 2.

4. A food product according to claim 3 wherein the food product is selected from the group consisting of a breakfast cereal, an infant cereal, an instant soup powder, a concentrated bouillon, an infant formula, a biscuit, a chocolate confectionery product, pasta or a pet food.

5. A food product according to claim 3 wherein the food product is a liquid soup or a ready to drink beverage.

6. Method of stabilizing omega-3 fatty acids, the method comprising applying omega-3 fatty acids onto a composition comprising defatted bran and wheat bran water extract, so that the omega-3 fatty acids are absorbed into or adsorbed onto the bran.

7. Use of a composition comprising defatted bran and wheat bran water extract to prevent or reduce the development of unpleasant odours in oils comprising omega-3 fatty acids.

## Patentansprüche

1. Nahrungsmittelzusammensetzung, umfassend Omega-3-Fettsäuren, entfettete Kleie und Weizenkleiewasserextrakt, wobei die Omega-3-Fettsäuren Eicosapentaensäure und/oder Docosahexaensäure umfassen, und wobei die entfettete Kleie entfettete Reiskleie oder entfettete Maiskleie ist.

2. Nahrungsmittelzusammensetzung nach Anspruch 1, wobei die Nahrungsmittelzusammensetzung eine wärmebehandelte Nahrungsmittelzusammensetzung ist.

3. Nahrungsmittelprodukt, umfassend die Nahrungsmittelzusammensetzung nach einem von Anspruch 1 und 2.

4. Nahrungsmittelprodukt nach Anspruch 3, wobei das Nahrungsmittelprodukt aus der Gruppe ausgewählt ist, bestehend aus einer Frühstückscerealie, einer Säuglingscerealie, einem Instantsuppenpulver, einer konzentrierten Bouillon, einer Säuglingsanfangsnahrung, einem Keks, einem Schokoladensüßwarenprodukt, Teigwaren oder einem Haustiernahrungsmittel.

5. Nahrungsmittelprodukt nach Anspruch 3, wobei das Nahrungsmittelprodukt eine flüssige Suppe oder ein trinkfertiges Getränk ist.

6. Verfahren zum Stabilisieren von Omega-3-Fettsäuren, das Verfahren umfassend ein Aufbringen von Omega-3-Fettsäuren auf eine Zusammensetzung, umfassend entfettete Kleie und Weizenkleiewasserextrakt, sodass die Omega-3-Fettsäuren in die Kleie absorbiert oder an diese adsorbiert werden.

7. Verwendung einer Zusammensetzung, umfassend entfettete Kleie und Weizenkleiewasserextrakt, um die Entstehung unangenehmer Gerüche in Ölen, umfassend Omega-3-Fettsäuren, zu verhindern oder zu verringern.

## Revendications

1. Composition alimentaire comprenant des acides gras oméga-3, du son dégraissé et un extrait d'eau de son de blé, dans laquelle les acides gras oméga-3 comprennent de l'acide eicosapentaénoïque et/ou de l'acide docosahexaénoïque, et dans laquelle le son dégraissé est un son de riz dégraissé ou du son de maïs dégraissé.

2. Composition alimentaire selon la revendication 1, dans laquelle la composition alimentaire est une composition alimentaire traitée thermiquement

3. Produit alimentaire comprenant la composition alimentaire selon l'une quelconque des revendications 1 et 2.

4. Produit alimentaire selon la revendication 3, dans lequel le produit alimentaire est choisi dans le groupe constitué d'une céréale pour le petitdéjeuner, d'une céréale pour nourrissons, d'une soupe instantanée en poudre, d'un bouillon concentré, d'une préparation pour nourrissons, d'un biscuit, d'un produit de confiserie au chocolat, de pâtes ou de la nourriture pour animaux de compagnie.

5. Produit alimentaire selon la revendication 3, dans lequel le produit alimentaire est une soupe liquide ou une boisson prête à boire.

6. Procédé de stabilisation d'acides gras oméga-3, le procédé comprenant l'application d'acides gras oméga-3 sur une composition comprenant du son dégraissé et un extrait d'eau de son de blé, de sorte que les acides gras oméga-3 sont absorbés dans ou absorbés sur le son.

7. Utilisation d'une composition comprenant du son dégraissé et un extrait d'eau de son de blé pour prévenir ou réduire le développement d'odeurs désagréables dans des huiles comprenant des acides gras oméga-3.
